# EUROPÄISCHE PATENTANMELDUNG

(11) **EP 1 715 404 A1**
(43) Veröffentlichungstag der Anmeldung: **25.10.2006**
(21) Anmeldenummer: 05008918.4
(22) Anmeldetag: 22.04.2005
(51) Int. Cl.: G06F 1/00

(54) **System zur Speicherung und Wiedergewinnung vertraulicher Informationen**

(71) Anmelder: SIEMENS AKTIENGESELLSCHAFT, 80333 München (DE)
(72) Erfinder: Herberth, Harald, 90522 Oberasbach (DE); Lange, Ronald, 90766 Fürth (DE)

(57) **Zusammenfassung**

Die Erfindung betrifft ein System und ein Verfahren zur Speicherung und/oder Wiedergewinnung vertraulicher Informationen für mindestens einen Anwender, mittels dessen ein Geheimnis, insbesondere ein Projektpasswort sicher wieder gewonnen werden kann. System zur Speicherung und/oder Wiedergewinnung vertraulicher Informationen für mindestens einen Anwender, insbesondere im Umfeld einer Projekt-Erstellung, mit ersten Mitteln (1) zur Verschlüsselung der vertraulichen Informationen mit einem öffentlichen Schlüssel eines asymmetrischen Verfahrens durch einen Schlüsseldienst (2a, 2b) und zur Speicherung der verschlüsselten Informationen in einem allgemein zugänglichen Speicher (3) und mindestens einer Eingabevorrichtung (4) zur Eingabe des zum öffentlichen Schlüssel zugehörigen privaten Schlüssels (5a, 5b) durch den Schlüsseldienst (2a, 2b) zur Wiedergewinnung der Informationen, wobei das System eine Auswahlvorrichtung zur Auswahl mindestens eines Schlüsseldiensts (2a, 2b) durch den mindesten einen Anwender aufweist.

## Beschreibung

Die Erfindung betrifft ein System und ein Verfahren zur Speicherung und/oder Wiedergewinnung vertraulicher Informationen für mindestens einen Anwender.

Die Erfindung bezieht sich auf alle Anwendungsfälle, in denen ein gemeinsames Geheimnis sicher abgespeichert werden, aber trotzdem der Fall des Verlustes des Geheimnisses auf eine sichere Weise kompensiert werden muss. Bei dem Geheimnis kann es sich beispielsweise um ein Passwort handeln. Ein Rücksetzen des Passworts bei Passwortverlust darf nicht erlaubt sein.

Insbesondere im Rahmen der Automatisierung industrieller Anlagen kann sich das auf ein Projekt-Passwort oder auf den Knowhow-Schutz (z.B. von Software-Bausteinen für eine speicherprogrammierbare Steuerung) beziehen. Hierbei kann das zu schützende Objekt ebenfalls durch ein Passwort gesichert sein.

Weiterhin wird im Rahmen von FDA oft gefordert, dass Passwörter nicht offen, sondern kryptografisch behandelt abgelegt werden. Die Problematik der Wiedergewinnung des Geheimnisses bzw. des Passworts stellt sich also auch in diesem Umfeld.

Allgemein bezieht sich die Erfindung somit auf Systeme, die ein Passwort in einer kryptografisch sicheren Form (z.B. den Hash eines Passworts) speichern. Diese Systeme sind in der Regel nicht in der Lage, das Passwort ausgeben zu können, falls der Anwender das Passwort vergessen hat.

Eine konkrete Anforderung im Umfeld der Projektierung einer Automatisierungslösung besteht darin, dass im Rahmen des Zugriffsschutzes bei der Projektierung unter anderem ein Projekt-Passwort definiert wird. Das Projekt-Passwort kann bei der Erstellung des Projektes angegeben werden. Im späteren Verlauf kann das Projekt-Passwort geändert werden. Jeder, der das Projekt-Passwort kennt, kann die Benutzerverwaltung neu projektieren und damit sich selber zum Administrator befördern. Damit ist das Projekt-Passwort ein kritisches Geheimnis und wird entsprechend mittels kryptografischer Mechanismen abgespeichert. Wird jedoch das Projekt-Passwort vergessen, ist unter Umständen (also beim Umzug in eine andere Benutzerumgebung) das Projekt nicht mehr verwendbar.

Bisher wurde das Problem dahingehend gelöst, dass das Passwort notiert wird und in geeigneter Form derart hinterlegt wird, dass es bei Verlust wieder auffindbar ist.

Eine andere Lösung besteht darin, dass das Passwort durch einen Systemadministrator auf einen neuen Wert zurückgesetzt werden kann, wobei aber das ursprüngliche Passwort für immer verloren bleibt. Dies ist in den auf Passwörtern basierenden Verfahren auch gängig. Hier werden die Passwörter mittels einer kryptografischen Hash-Funktion bearbeitet. Gespeichert wird anschließend nicht das Passwort, sondern nur der Hash-Wert. In diesen Systemen kann allerdings das Passwort durch einen Administrator jederzeit gelöscht werden und mit einem neuen Passwort initialisiert werden. Dieses Verhalten ist jedoch beim Schutz von Knowhow und im Umfeld von Passwortverwendung im Automatisierungsumfeld nicht akzeptabel, da es eine Sicherheitslücke darstellt.

Die Aufgabe der vorliegenden Erfindung besteht daher darin, ein System und ein Verfahren anzugeben, mittels dessen ein Geheimnis, insbesondere ein Projektpasswort sicher wieder gewonnen werden kann.

Die Aufgabe wird gelöst durch ein System zur Speicherung und/oder Wiedergewinnung vertraulicher Informationen für mindestens einen Anwender, insbesondere im Umfeld einer Projekt-Erstellung, mit ersten Mitteln zur Verschlüsselung der vertraulichen Informationen mit einem öffentlichen Schlüssel eines asymmetrischen Verfahrens durch einen Schlüsseldienst und zur Speicherung der verschlüsselten Informationen in einem allgemein zugänglichen Speicher und mindestens einer Eingabevorrichtung zur Eingabe des zum öffentlichen Schlüssel zugehörigen privaten Schlüssels durch den Schlüsseldienst zur Wiedergewinnung der Informationen, wobei das System eine Auswahlvorrichtung zur Auswahl mindestens eines Schlüsseldiensts durch den mindestens einen Anwender aufweist.

Die Aufgabe wird weiterhin gelöst durch ein Verfahren zur Speicherung und/oder Wiedergewinnung vertraulicher Informationen für mindestens einen Anwender, insbesondere im Umfeld einer Projekt-Erstellung, bei denen vertrauliche Informationen mit einem öffentlichen Schlüssel eines asymmetrischen Verfahrens durch einen Schlüsseldienst verschlüsselt werden und die verschlüsselten Informationen in einem allgemein zugänglichen Speicher gespeichert werden und der zum öffentlichen Schlüssel zugehörige private Schlüssel durch den Schlüsseldienst zur Wiedergewinnung der Informationen eingegeben wird, wobei mindestens ein Schlüsseldienst durch mindestens einen Anwender ausgewählt wird.

Der Erfindung liegt die Erkenntnis zugrunde, dass ein Passwort oder eine andere verschlüsselte Information sicher wieder gewonnen werden kann, wenn sie mit einem öffentlichen Schlüssel verschlüsselt wird und anschließend durch einen auswählbaren Schlüsseldienst mit dem zugehörigen privaten Schlüssel wieder entschlüsselt werden kann.

Im Rahmen der Erfindung wird die zu verschlüsselnde Information, beispielsweise das Projekt-Passwort, bei der ersten Eingabe und bei jeder nachfolgenden Änderung zusätzlich mit einem oder mehreren öffentlichen Schlüsseln eines asymmetrischen Verfahrens verschlüsselt. Die Verschlüsselung mittels mehrerer öffentlicher Schlüssel wird vorgenommen, wenn mehrere Schlüsseldienste zur Wiedergewinnung der Informationen genutzt werden sollen, so dass immer einer zur Verfügung steht.

Diese verschlüsselte Information wird in den Projektdaten mit abgelegt. Damit ist der Besitzer des privaten Schlüssels, beispielsweise der Schlüsseldienst, in der Lage, das Projekt-Passwort aus den Projektdaten wiederzugewinnen, wobei es für jeden Anderen weiterhin eine nicht verfügbare Information darstellt.

Von besonderem Vorteil ist hierbei, dass der Betreiber des Schlüsseldienstes, welcher über den privaten Schlüssel verfügt und die verschlüsselte Information wieder gewinnen kann, durch den Anwender, beispielsweise den Ersteller des Automatisierungsprojekts, ausgewählt werden kann. Dies wird dadurch erreicht, dass der Anwender z.B. bei der Erstellung des Projektes angeben kann, ob er für das Projekt-Passwort einen Schlüsseldienst haben möchte und wer der Betreiber des Schlüsseldienstes sein soll. Letzteres erfolgt beispielsweise durch die Angabe eines Zertifikates des entsprechenden Schlüsseldienstes. Hierbei kann durch den Anwender beispielsweise auch mehr als ein Zertifikat für mehrere Schlüsseldienste angegeben werden. Dadurch können mehrere parallele Schlüsseldienste realisiert werden, so dass der Anwender gewährleisten kann, im Notfall Zugriff auf mindestens einen der zur Verfügung stehenden Schlüsseldienste zu haben.

Dem Anwender wird beispielsweise mit einer ausgelieferten Software standardmäßig das Zertifikat des Herstellers der Software beigefügt. Anwender, die das Zertifikat des Software-Herstellers aus ihrem Sicherheitsverständnis heraus nicht akzeptieren können, können ein eigenes Zertifikat importieren und somit einen anderen Schlüsseldienst als den ursprünglichen Hersteller der Software für die Entschlüsselungszwecke auswählen.

Die Software enthält weiterhin ein Tool, welches für ein Projekt ermitteln kann, ob ein oder mehrere Schlüsseldienste konfiguriert sind, wer der Betreiber des entsprechenden Schlüsseldienstes ist (der Eigentümer, die Identität des Zertifikats). Falls dem Tool auch der passende private Schlüssel mitgegeben wird, ist dieses Tool auch in der Lage, das Projekt-Passwort wiederzugewinnen und anzuzeigen.

Die Erfindung lässt sich neben der Verschlüsselung von Passwörtern auch für den Knowhow-Schutz von Objekten, beispielsweise von Bausteinen für speicherprogrammierbare Steuerungen verwenden.

Der besondere Vorteil der Erfindung liegt darin, dass geheime Information, beispielsweise ein Passwort auf eine sichere Art wieder gewonnen werden kann, ohne dass das Passwort rückgesetzt werden darf bzw. werden muss. Damit bietet die Erfindung einen enormen sicherheitstechnischen Vorteil. Zudem erlaubt der Gegenstand der Erfindung dem Anwender auszuwählen, ob überhaupt ein Schlüsseldienst für ein zu schützenden Objekt bzw. ein Passwort bereitgestellt wird, und von wem der Schlüsseldienst betrieben wird. Des Weiteren ist die Auswahl mehrerer Schlüsseldienste zur Entschlüsselung des Passworts möglich. Sowohl der Hersteller der Projektierungssoftware als auch andere Dienste können auf diese Weise dem Anwender ein attraktives Service-Angebot liefern.

Im Folgenden wird die Erfindung anhand der Figur näher beschrieben und erläutert:

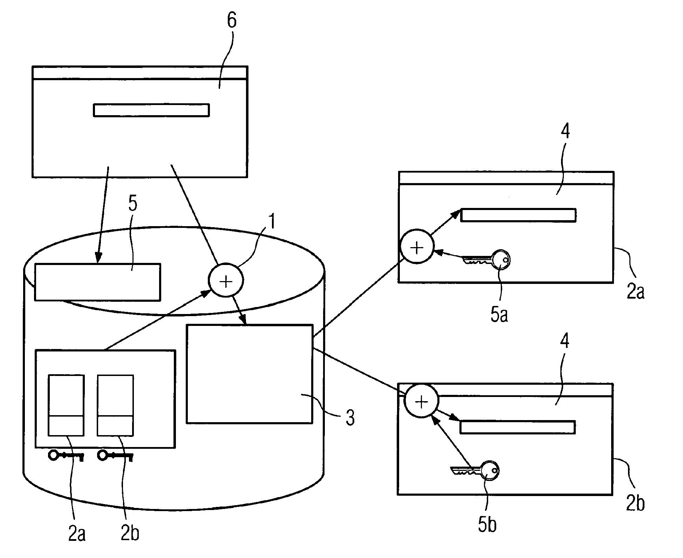

FIG 1 zeigt das System zur Speicherung und/oder Wiedergewinnung vertraulicher Informationen für mindestens einen Anwender. Hierbei wird durch den Anwender ein Passwort über eine Passwort-Eingabe 6 eingegeben. Das Passwort wird in Form eines Hash-Werts verschlüsselt und in den Projektdaten abgelegt. Hierfür steht ein Speicher 3 zur Verfügung. Das Passwort wird mit Hilfe eines asymmetrischen Verfahrens durch Mittel 1 zur Verschlüsselung verschlüsselt. Das verschlüsselte Passwort wird ebenfalls im Speicher 3 abgelegt. Die Verschlüsselung erfolgt durch Schlüsseldienste 2a, 2b. Hierbei sind die Schlüsseldienste durch den Anwender auswählbar. Die Wiedergewinnung des Passworts bzw. der geheimen Information erfolgt durch die privaten Schlüssel 5a, 5b der Schlüsseldienste 2a, 2b. Hierbei wird der dem öffentlichen Schlüssel zugehörige private Schlüssel 5a, 5b durch die Schlüsseldienste 2a, 2b über die Eingabevorrichtung 4 eingegeben. Die Schlüsseldienste 2a, 2b können vom Anwender über ihnen zugehörige Zertifikate ausgewählt werden. Der Anwender kann ein oder mehrere Schlüsseldienste für die Verwaltung bzw. Wiedergewinnung der vertraulichen Information auswählen.

## Patentansprüche

1. System zur Speicherung und/oder Wiedergewinnung vertraulicher Informationen für mindestens einen Anwender, insbesondere im Umfeld einer Projekt-Erstellung, mit
• ersten Mitteln (1) zur Verschlüsselung der vertraulichen Informationen mit einem öffentlichen Schlüssel eines asymmetrischen Verfahrens durch einen Schlüsseldienst (2a, 2b) und zur Speicherung der verschlüsselten Informationen in einem allgemein zugänglichen Speicher (3) und
• mindestens einer Eingabevorrichtung (4) zur Eingabe des zum öffentlichen Schlüssel zugehörigen privaten Schlüssels (5a, 5b) durch den Schlüsseldienst (2a, 2b) zur Wiedergewinnung der Informationen,
wobei das System eine Auswahlvorrichtung zur Auswahl mindestens eines Schlüsseldiensts (2a, 2b) durch den mindesten einen Anwender aufweist.

2. System nach Anspruch 1, mit zweiten Mitteln zur Verschlüsselung der vertraulichen Informationen, insbesondere zur Bildung eines Hashwerts (5), und zur Speicherung der verschlüsselten Informationen, wobei die Verschlüsselung in eine Richtung erfolgt und die verschlüsselte Information ohne Schlüsseldienst nicht wieder gewonnen und/oder rückgesetzt werden kann.

3. System nach einem der Ansprüche 1 oder 2, bei dem der allgemein zugängliche Speicher zur Speicherung von Projektdaten vorgesehen ist und die verschlüsselten Informationen in den Projektdaten ablegbar sind.

4. System nach einem der vorhergehenden Ansprüche, bei dem die Auswahlvorrichtung zur Bereitstellung mindestens eines Zertifikats mindestens eines Schlüsseldiensts vorgesehen ist.

5. System nach Anspruch 4, bei dem die Auswahlvorrichtung zur Bereitstellung mehrerer Zertifikate und/oder zur parallelen Auswahl mehrerer Schlüsseldienste durch den Anwender vorgesehen ist.

6. System nach einem der vorhergehenden Ansprüche, mit einem Software-Tool zur Ermittlung von in einem Projekt verwendeten Schlüsseldiensten und/oder zur Angabe der vorhandenen Zertifikate.

7. System nach Anspruch 6, bei dem das Software-Tool zur Wiedergewinnung der verschlüsselten Informationen,
wobei das Software-Tool zur Herausschneiden der verschlüsselten Information insbesondere aus den Projektdaten vorgesehen ist und wobei das Software-Tool zur Entschlüsselung der Informationen mithilfe des privaten Schlüssels vorgesehen ist.

8. Verfahren zur Speicherung und/oder Wiedergewinnung vertraulicher Informationen für mindestens einen Anwender, insbesondere im Umfeld einer Projekt-Erstellung, bei dem
• vertrauliche Informationen mit einem öffentlichen Schlüssel eines asymmetrischen Verfahrens durch einen Schlüsseldienst verschlüsselt werden und die verschlüsselten Informationen in einem allgemein zugänglichen Speicher gespeichert werden und
• der zum öffentlichen Schlüssel zugehörige private Schlüssel durch den Schlüsseldienst zur Wiedergewinnung der Informationen eingegeben wird,
wobei mindestens ein Schlüsseldienst durch mindesten einen Anwender ausgewählt wird.

9. Verfahren nach Anspruch 8, bei dem die vertraulichen Informationen insbesondere in Form eines Hashwerts verschlüsselt und gespeichert werden, wobei die Verschlüsselung in eine Richtung erfolgt und die verschlüsselte Information ohne Schlüsseldienst nicht wieder gewonnen und/oder rückgesetzt werden kann.

10. Verfahren nach einem der Ansprüche 8 oder 9, bei dem die verschlüsselten Informationen in den Projektdaten abgelegt werden.

11. Verfahren nach einem der Ansprüche 8 bis 10, bei dem mindesten ein Zertifikat mindestens eines Schlüsseldiensts zur Auswahl durch den Anwender bereitgestellt wird.

12. Verfahren nach Anspruch 11, bei dem mehrere Zertifikate bereitgestellt werden und/oder mehrere Schlüsseldienste parallel durch den Anwender ausgewählt werden.

13. Verfahren nach einem der Ansprüche 8 bis 12, bei dem in einem Projekt verwendete Schlüsseldienste durch ein Software-Tool ermittelt werden und/oder vorhandene Zertifikate durch das Software-Tool angegeben werden.

14. Verfahren nach Anspruch 15, bei dem die verschlüsselten Informationen durch das Software-Tool insbesondere aus den Projektdaten herausgeschnitten werden und mithilfe des privaten Schlüssels durch das Software-Tool entschlüsselt werden.
